(19) Europäisches Patentamt
European Patent Office
Office européen des brevets

(11) **EP 2 466 839 A1**

(12) **DEMANDE DE BREVET EUROPEEN**

(43) Date de publication:
**20.06.2012 Bulletin 2012/25**

(51) Int Cl.:
**H04L 27/34** *(2006.01)*

(21) Numéro de dépôt: **11193559.9**

(22) Date de dépôt: **14.12.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **17.12.2010 FR 1004946**

(71) Demandeur: **Thales**
**92200 Neuilly Sur Seine (FR)**

(72) Inventeurs:
• **Faraj, Zakariya**
**31700 BLAGNAC (FR)**
• **Gayrard, Jean-Didier**
**31270 CUGNAUX (FR)**
• **Arnal, Fabrice**
**31270 CUGNAUX (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(54) **Procede et systeme de transmission utilisant une modulation hierarchique adaptative et programmable**

(57)     L'invention concerne un procédé d'émission d'un signal comportant simultanément un premier flux de données binaires et au moins un autre flux de données binaires, qui comprend dans l'ordre :

i. une étape de répartition dynamique des bits des flux de données entre des codeurs (1,2) dite étape d'injection, avec un codeur par flux de données,

ii. une étape de codage des bits répartis au moyen des codeurs (1,2),

iii. une étape de répartition dynamique des bits codés entre des niveaux hiérarchiques d'un modulateur (20), dite étape d'aiguillage,

iv. une étape de modulation hiérarchique au moyen du modulateur (20).

FIG.4a

**Description**

Le domaine de l'invention est celui de l'émission et de la réception de données numériques codées, basées sur une modulation hiérarchique.

Dans le cas des systèmes de transmission avec des atténuations du signal variables, on souhaite de manière générale que le procédé de transmission du signal présente un haut débit ainsi qu'une bonne disponibilité dans le temps. Le débit étant de la forme :

$$\text{efficacité spectrale} \times \text{bande passante},$$

il s'agit donc d'obtenir une haute efficacité spectrale et une bonne disponibilité.

Dans le cas de services interactifs ou point à point, ce problème est résolu par les couches physiques adaptatives : les récepteurs signalent le RSB (Rapport Signal sur Bruit) à l'émetteur, qui peut ajuster, par exemple, le schéma de modulation et de codage de la forme d'onde. Cette solution n'est pas envisageable en diffusion.

Dans les futurs systèmes satellite de diffusion, que ce soit vers les mobiles, ou vers les stations fixes en bande Ka (20-22 GHz), il est difficile d'assurer une bonne disponibilité et une haute efficacité spectrale en raison de l'occurrence de fortes atténuations dans le canal. Dans le cas des mobiles, ces atténuations résultent de masquages par le relief, les bâtiments, la végétation ; dans le cas de la diffusion vers des stations fixes, dans la bande Ka, elles sont dues à des événements climatiques tels que la pluie.

Une solution connue est de fournir deux niveaux de qualité de service :

- un service minimal ou prioritaire (HP pour High Priority) avec une très bonne disponibilité même pendant les périodes de fortes atténuations, comme par exemple une définition standard de l'image dans le cas de service vidéo assurée pendant 99,9% de l'année, y compris pendant les périodes pluvieuses et
- un service nominal (LP pour Low Priority) pendant les périodes favorables comme par exemple pour un mobile dans la ligne de vue du satellite, ou en ciel clair pour la bande Ka pendant 99% de l'année.

Par exemple pour la diffusion de HDTV en bande Ka, le service minimal TV est en SD (« Standard Definition »), le service nominal étant en définition HD (« High Definition »).

Cette solution est obtenue en utilisant la modulation hiérarchique. L'état de l'art sur la modulation hiérarchique est typiquement celui des normes comme le DVB-SH (EN 302 583) ou le DVB-S2 (EN 302 307).

La modulation hiérarchique permet de faire passer dans le même canal de transmission, deux flux binaires dit haute priorité (HP) et basse priorité (LP), les bits de poids fort de la constellation de la modulation (ou MSB acronyme de l'expression anglo-saxonne Most Significant Bits) étant réservés au flux HP après codage, ceux de poids faible, au flux LP après codage. Le taux de codage de chaque flux est ajustable, ce qui permet d'avoir deux points de fonctionnement différents pour le flux prioritaire (HP) et pour le flux basse priorité (LP). On rappelle qu'un point de fonctionnement est le RSB requis pour un taux d'erreur par bit (ou TEB) ciblé.

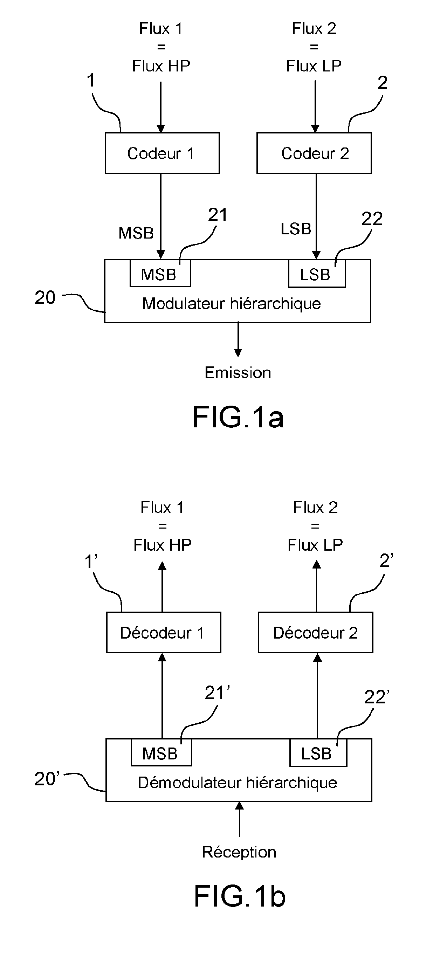

Il est ainsi créé au moyen d'un émetteur tel que montré figure 1a, deux canaux de transmission virtuels indépendants : un canal HP et un canal LP. Il comprend un codeur 1, 2 pour chaque flux, un modulateur hiérarchique 20 qui comprend des moyens 21 pour réserver les bits de poids fort (ou MSB acronyme de l'expression anglo-saxonne Most Significant Bits) au flux HP, et des moyens 22 pour réserver ceux de poids faible au flux LP.

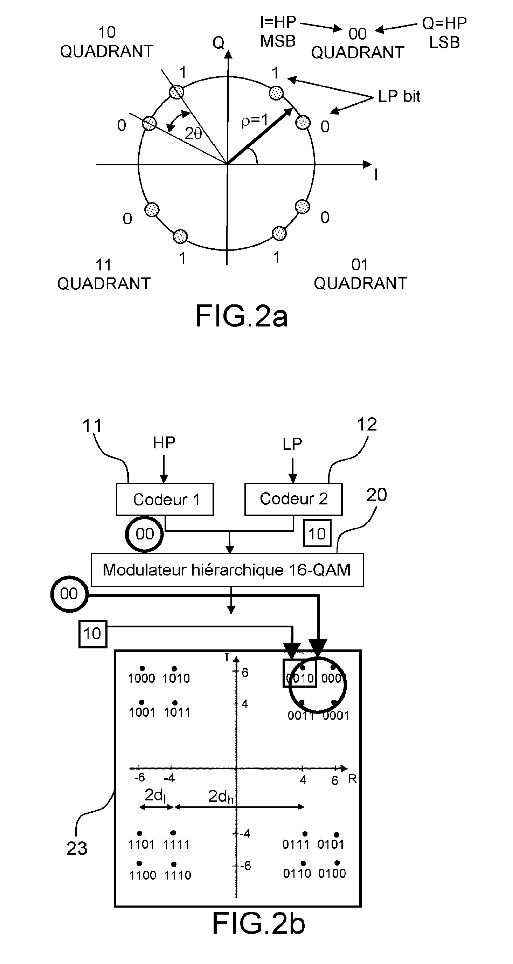

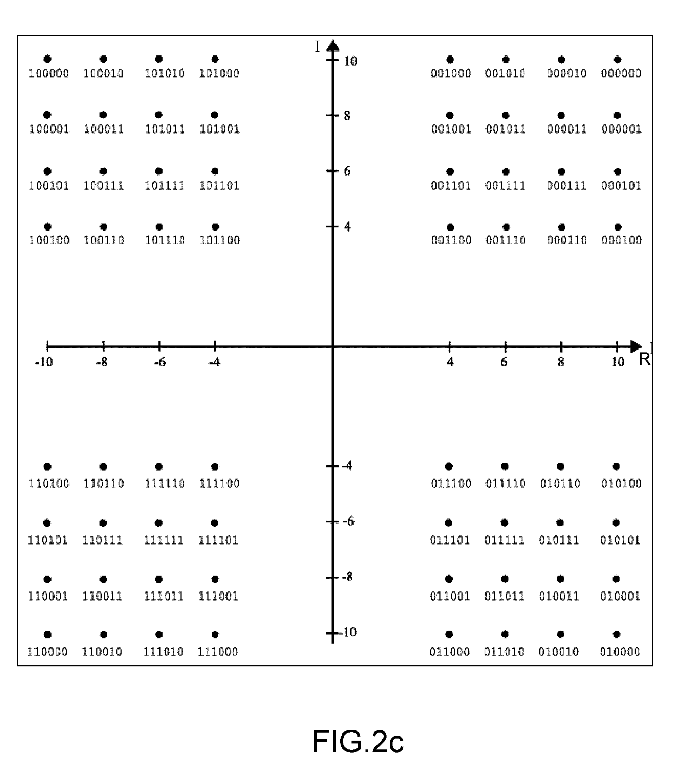

Le ratio des débits HP et LP est fixé par le type de constellation de la modulation. Deux exemples de diagrammes de constellation sont présentés figures 2. Dans l'exemple de la figure 2a, la modulation hiérarchique basée sur une modulation 8PSK (acronyme de l'expression anglo-saxonne « 8 Phase Shift Keying », ou modulation par déplacement de phase à 8 valeurs de phase possibles), transmet pour chaque symbole, deux bits HP et un bit LP ; la modulation hiérarchique basée sur une modulation 16-QAM (acronyme de l'expression anglo-saxonne « 16 Quadrature Amplitude Modulation » ou modulation d'amplitude en quadrature à 16 états) montrée figure 2b, transmet pour chaque symbole, deux bits HP et deux bits LP. On montre aussi figure 2b où se retrouvent les bits codés 00 provenant du codeur 1 et les bits 10 provenant du codeur 2 dans le diagramme de la constellation 23. Le ratio des débits HP et LP est donc fortement contraint.

Côté récepteur, le flux de base (HP) reçu peut pratiquement toujours être décodé correctement, mais le flux amélioré (LP) reçu n'est décodé correctement que si les conditions sont favorables. Une conception classique de récepteur est représentée figure 1b, symétrique de l'émetteur de la figure 1a. Il comprend un démodulateur hiérarchique 20' avec des moyens 21' pour attribuer les bits de poids fort (ou MSB acronyme de l'expression anglo-saxonne Most Significant Bits) à un premier flux, et des moyens 22' pour attribuer ceux de poids faible à un deuxième flux, deux décodeurs l'un 1' pour le flux comportant les bits de poids fort, l'autre 2' pour le flux comportant les bits de poids faible, qui en sortie sont l'un le flux HP, l'autre le flux LP.

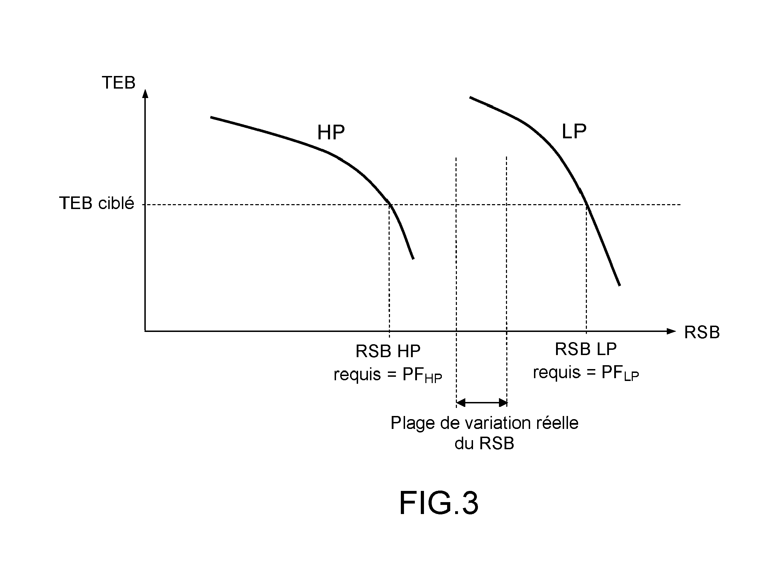

On a représenté figure 3, des exemples de courbes de taux d'erreur par bit (TEB) en fonction du RSB, l'une pour un flux HP codé avec un taux de codage très robuste (par exemple %), et un flux LP, plus capacitif, codé avec un taux de codage plus élevé (par exemple½). A partir d'une qualité requise (TEB ciblé), on détermine le RSB requis pour chaque flux HP, c'est-à-dire les points de fonctionnement HP et LP désignés $PF_{HP}$ et $PF_{LP}$. On voit que pour certaines plages de variation réelle du RSB dans un système donné, telles que celle de la figure 3, le RSB est trop élevé par rapport au point de fonctionnement du flux HP et trop bas pour le flux LP qui ne sera donc jamais décodé : les performances dans ce type de système sont alors sous-optimales.

Les points de fonctionnement des deux canaux virtuels HP et LP sont par construction supérieurs aux points de fonctionnement d'un canal réel équivalent ayant la même efficacité spectrale déterminée en fonction du taux de codage (= nombre de bits utiles / (nombre de bits utiles + nombre de bits redondants)) et de la modulation choisie. On parle alors de pénalité.

Les pénalités des canaux virtuels HP et LP sont dépendantes des caractéristiques géométriques de la constellation. Il s'agit d'un angle de séparation (2θ) des plots basse priorité dans une modulation 8PSK (voir figure 2a) et d'un rapport d'amplitude ($\alpha=d_h / d_l$) dans le cas de la modulation 16-QAM (voir figure 2b). Ce paramètre permet d'ajuster les pénalités HP et LP.

Finalement le ratio des débits HP et LP ainsi que les points de fonctionnement sont fixes et dépendent du taux de codage des codeurs des flux HP et LP, ainsi que du type de la constellation.

Le document EP 2 207 320 propose une amélioration statique de la courbe de performances du flux LP (Taux d'Erreurs par Bit en fonction du Rapport Signal sur Bruit). Un premier codeur est utilisé pour coder les bits du flux HP comme dans une modulation hiérarchique classique. Par contre, un deuxième codeur est utilisé pour coder les bits des flux LP et une partie ou la totalité des bits HP permettant ainsi de créer une redondance entre les 2 codeurs au niveau des bits HP. Cette redondance est exploitée lors du décodage pour améliorer le point de fonctionnement du flux LP (il s'agit d'une amélioration fixe de l'ordre de 0.6 dB pour $\alpha$=1). Cependant, cette amélioration statique du flux LP impose un débit contraint pour le flux LP.

Le but de l'invention est d'augmenter la disponibilité et l'efficacité spectrale.

Plus précisément l'invention a pour objet un procédé d'émission d'un signal comportant simultanément un premier flux de données binaires et au moins un autre flux de données binaires, caractérisé en ce qu'il comprend dans l'ordre :

 i. une étape de répartition dynamique des bits des flux de données entre des codeurs dite étape d'injection, avec un codeur par flux de données,
 ii. une étape de codage des bits répartis au moyen des codeurs,
 iii. une étape de répartition dynamique des bits codés entre des niveaux hiérarchiques d'un modulateur, dite étape d'aiguillage,
 iv. une étape de modulation hiérarchique au moyen du modulateur.

L'invention a aussi pour objet un procédé de réception d'un signal émis selon le procédé précédent, qui comprend dans l'ordre :

- une étape de démodulation hiérarchique au moyen d'un démodulateur, avec un niveau hiérarchique par flux de données, de manière réciproque à la modulation,
- une étape de répartition dynamique des bits démodulés entre des décodeurs de manière réciproque à l'aiguillage,
- une étape de décodage des flux de données avec un décodage par flux de données au moyen d'un décodeur, de manière réciproque au codage,
- une étape de répartition dynamique des flux décodés en un premier flux et au moins un autre flux de données binaires de manière réciproque à l'injection.

On obtient ainsi un procédé de transmission d'un signal comportant simultanément un premier flux de données binaires et au moins un autre flux de données binaires permettant l'adaptation des débits et des points de fonctionnement des différents flux grâce notamment à une modulation et démodulation hiérarchiques programmables et/ou adaptatives (dans le temps).

Selon une caractéristique de l'invention, l'injection et/ou l'aiguillage sont paramétrés en fonction de la nature des flux de données, de leurs débits et/ou de points de fonctionnement désirés et/ou du temps.

Le premier flux de données binaires est typiquement un flux prioritaire, et le (ou les) autre(s) flux de données binaires est (sont) un (des) flux moins prioritaire(s).

Selon un premier mode d'exploitation, il comporte un flux prioritaire et un flux moins prioritaire et le signal étant un signal TVHD qui comporte un signal standard et un complément HD, le flux prioritaire est dédié au signal standard, le flux moins prioritaire est dédié au complément HD.

Selon un autre mode d'exploitation, il comporte un flux à haute priorité, un flux à priorité moyenne et un flux à basse priorité, et le signal étant un signal TV3D qui comporte un signal standard, un complément HD et un complément 3D, le flux à haute priorité est dédié au signal standard, le flux à priorité moyenne est dédié au complément HD, et le flux à basse priorité est dédié au complément 3D.

L'invention concerne également un émetteur d'un signal comportant simultanément un premier flux de données binaires et au moins un autre flux de données binaires, qui comprend :

- un injecteur qui répartit dynamiquement les bits des flux de données entre des codeurs, avec un codeur par flux de données,
- les codeurs qui codent les bits répartis,
- un aiguilleur relié aux codeurs qui répartit dynamiquement les bits codés entre des niveaux hiérarchiques d'un modulateur hiérarchique, avec un niveau hiérarchique par flux de données,
- un modulateur hiérarchique des bits codés, relié à l'aiguilleur.

Cet émetteur concerne par exemple deux flux et comporte deux codeurs de type codeur de canal et un modulateur hiérarchique à deux niveaux de type MSB et LSB.

Cet émetteur utilisant une modulation hiérarchique adaptative et programmable permet :

1/ grâce à l'injecteur, d'ajuster dynamiquement les débits des flux binaires haute priorité (HP) et basse priorité (LP), aux débits des flux de données des deux services : service réduit et service nominal ; ceci a bien évidement un impact sur les points de fonctionnement (RSB : Rapport Signal sur Bruit)

2/ grâce à l'injecteur et à l'aiguilleur, d'ajuster dynamiquement les pénalités des points de fonctionnement des deux canaux haute priorité (HP) et basse priorité (LP) aux conditions de propagation : point de fonctionnement du canal HP pour correspondre aux cas des fortes atténuations (masquage ou pluie par exemple), le point de fonctionnement du canal LP pour correspondre aux cas favorables (ligne de vue et ciel clair par exemple).

Cet émetteur permet ainsi d'adapter dynamiquement les différents flux pour répondre aux besoins de l'application, et d'adapter dynamiquement les canaux virtuels aux conditions de propagation, et ce faisant d'optimiser la disponibilité.

L'invention a également pour objet un récepteur d'un signal émis par l'émetteur précédent, qui comprend :

a. un démodulateur hiérarchique du signal reçu, avec un niveau hiérarchique par flux de données,

b. un désaiguilleur relié au démodulateur hiérarchique, qui répartit dynamiquement les bits démodulés entre des décodeurs de manière réciproque à l'aiguilleur de l'émetteur,

c. les décodeurs des bits démodulés, avec un décodeur par flux de données,

d. un désinjecteur relié aux décodeurs, qui répartit dynamiquement les bits décodés en un premier flux de données binaires et un (ou des) autre flux de données binaires de manière réciproque à l'injecteur de l'émetteur.

Enfin, l'invention a pour objet un système de transmission simultanée d'un premier flux de données binaires et d'au moins un autre flux de données binaires, équipé d'un émetteur et d'un récepteur tels que décrits. Il s'agit par exemple d'un système de diffusion terrestre ou par satellite.

D'autres caractéristiques et avantages de l'invention apparaîtront à la lecture de la description détaillée qui suit, faite à titre d'exemple non limitatif et en référence aux dessins annexés dans lesquels :

les figures 1a et 1b déjà décrites représentent schématiquement un émetteur avec modulateur hiérarchique (fig 1a) et un récepteur avec démodulateur hiérarchique (fig 1 b) selon l'état de la technique,
les figures 2 sont des diagrammes de modulation hiérarchique 8PSK (fig 2a), 16-QAM (fig 2b) et 64-QAM (fig 2c),
la figure 3 déjà décrite illustre schématiquement les points de fonctionnement,
les figures 4a et 4b représentent schématiquement un exemple d'émetteur (fig 4a) et un exemple de récepteur (fig 4b) à deux flux, selon l'invention,
les figures 5a et 5b représentent schématiquement un exemple d'émetteur (fig 5a) et un exemple de récepteur (fig 5b) à trois flux, selon l'invention.

D'une figure à l'autre, les mêmes éléments sont repérés par les mêmes références.

La modulation hiérarchique classique cloisonne les 2 flux HP et LP dans le sens où chaque flux est (préalablement à la modulation) codé séparément l'un de l'autre et où chaque flux codé joue le même rôle lors de la modulation hiérarchique comme illustré dans la figure 1a. Tous les bits HP sont codés par le codeur 1, tous les bits LP sont codés par le codeur 2 ; les codeurs peuvent être identiques mais pas nécessairement. Au niveau du modulateur hiérarchique 20, tous les bits codés prioritaires (MSB) proviennent du codeur 1, alors que tous les bits codés moins prioritaires (LSB) proviennent du codeur 2. Ceci est illustré dans l'exemple suivant sous forme de tableaux, le premier tableau pour les codeurs où 8 bits HP sont codés par le codeur 1 et 8 bits LP sont codés par le codeur 2, le second tableau pour le modulateur :

| Bits en entrée du codeur 1 | HP | HP | HP | HP | HP | HP | HP | HP |
|---|---|---|---|---|---|---|---|---|
| Bits en entrée du codeur 2 | LP | LP | LP | LP | LP | LP | LP | LP |

| Bits codés prioritaires | 1 | 1 | 1 | 1 | 1 | 1 | 1 | 1 |
|---|---|---|---|---|---|---|---|---|
| Bits codés moins prioritaires | 2 | 2 | 2 | 2 | 2 | 2 | 2 | 2 |

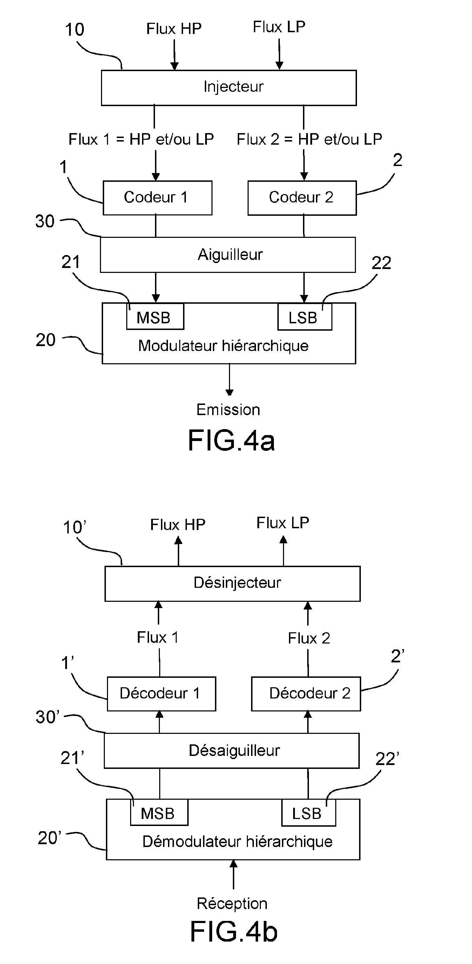

Le principe de base de l'invention décrit en relation avec les figures 4a et 4b est de :

1) pouvoir injecter au moyen d'un injecteur 10, des bits LP à la place des bits HP avant le codeur 1 et/ou injecter des bits HP à la place des bits LP avant le codeur 2, pour ainsi pouvoir adapter les débits aux besoins de l'application ; dans le cas par exemple d'une application de diffusion TV HD (à haute définition), il s'agit d'adapter le ratio des débits d'une séquence relativement statique comme le journal TV et celui d'une séquence animée comme un match de foot, bien évidemment, ceci a un impact sur les points de fonctionnement (RSB : Rapport Signal sur Bruit). Les flux de données en entrée de l'injecteur sont ainsi répartis en un flux intermédiaire 1 et un flux intermédiaire 2 ; plus généralement il y a autant de flux intermédiaires en sortie de l'injecteur que de flux (N) en entrée de l'injecteur.
2) pouvoir échanger au moyen d'un aiguilleur 30, des bits codés du codeur 1 par des bits codés du codeur 2 avant le modulateur hiérarchique 20, pour ainsi pouvoir adapter les points de fonctionnement et donc améliorer la disponibilité.

L'avantage de cette solution est double :

1) pouvoir s'adapter dynamiquement aux débits des flux HP et LP en paramétrant la loi de répartition de l'injecteur,
2) pouvoir adapter dynamiquement les points de fonctionnement des flux HP et LP en paramétrant la loi de répartition de l'injecteur et/ou de l'aiguilleur.

Trois modes de fonctionnement sont possibles : injection sans aiguillage, aiguillage sans injection, injection avec aiguillage. On va présenter un exemple pour chacun de ces modes.
Le rôle de l'injecteur 10 est de répartir dynamiquement les bits des flux HP et LP entre les deux codeurs 1 et 2 selon une loi prédéfinie, connue de l'émetteur et du récepteur. Les tableaux suivants illustrent un exemple d'injection sans aiguillage dans laquelle un bit LP est inséré dans le codeur 1 une fois sur 3.

| Bits en entrée du codeur 1 | HP | HP | LP | HP | HP | LP | HP | HP |
|---|---|---|---|---|---|---|---|---|
| Bits en entrée du codeur 2 | LP | LP | LP | LP | LP | LP | LP | LP |

| Bits codés prioritaires | 1 | 1 | 1 | 1 | 1 | 1 | 1 | 1 |
|---|---|---|---|---|---|---|---|---|
| Bits codés moins prioritaires | 2 | 2 | 2 | 2 | 2 | 2 | 2 | 2 |

Comparé à la répartition de l'exemple précédent, 6 bits du flux HP sont codés (par le codeur 1) au lieu de 8, et 10 bits du flux LP sont codés (par les codeurs 1 et 2) au lieu de 8. Concernant les points de fonctionnement, il n'en résulte pas de changement pour le flux HP dont le RSB reste inchangé. En revanche, les bits du flux LP ne sont pas tous codés de la même façon, puisque certains le sont par le codeur 1, d'autres par le codeur 2 ; le RSB pour le flux LP est donc modifié. Comme il s'agit d'un mode sans aiguillage, le modulateur 20 fonctionne comme dans l'exemple précédent.
Le rôle de l'aiguilleur 30 est de répartir dynamiquement les bits codés entre les niveaux hiérarchiques (en l'occurrence entre bits prioritaires et moins prioritaires) du modulateur hiérarchique 20 selon une loi prédéfinie, connue de l'émetteur et du récepteur. Les tableaux suivants illustrent un exemple d'aiguillage sans injection, avec un aiguillage alterné des bits codés : un bit codé du codeur 1 devient moins prioritaire 1 fois sur 2. Il en résulte que des bits codés prioritaires (MSB acronyme de l'expression anglo-saxonne « Most Significant Bit ») proviennent du codeur 1 et du codeur 2, et que des bits codés moins prioritaires (LSB acronyme de l'expression anglo-saxonne « Least Significant Bit ») proviennent également du codeur 1 et du codeur 2, et ce dans la même proportion. Comme il s'agit d'un mode sans injection, les bits en entrée des codeurs sont comme dans l'exemple initial.

| Bits en entrée du codeur 1 | HP | HP | HP | HP | HP | HP | HP | HP |
| Bits en entrée du codeur 2 | LP | LP | LP | LP | LP | LP | LP | LP |

| Bits codés prioritaires | 1 | 2 | 1 | 2 | 1 | 2 | 1 | 2 |
| Bits codés moins prioritaires | 2 | 1 | 2 | 1 | 2 | 1 | 2 | 1 |

Enfin, il est bien sûr possible de cumuler injection et aiguillage. Ceci est illustré avec les tableaux suivants qui combinent les deux exemples précédents : injection d'un bit LP vers le codeur 1 une fois sur trois et aiguillage alterné des bits codés.

| Bits en entrée du codeur 1 | HP | HP | LP | HP | HP | LP | HP | HP |
| Bits en entrée du codeur 2 | LP | LP | LP | LP | LP | LP | LP | LP |

| Bits codés prioritaires | 1 | 2 | 1 | 2 | 1 | 2 | 1 | 2 |
| Bits codés moins prioritaires | 2 | 1 | 2 | 1 | 2 | 1 | 2 | 1 |

L'avantage de cette solution est double :

1) pouvoir s'adapter dynamiquement aux débits des flux HP et LP en paramétrant la loi de répartition de l'injecteur 10,
2) pouvoir adapter dynamiquement les points de fonctionnement des flux HP et LP en paramétrant la loi de répartition de l'injecteur 10 et/ou de l'aiguilleur 30.

Ces lois de répartition sont déterminées a priori ; elles peuvent être choisies en fonction des débits, de la nature des flux (prioritaires, moins prioritaires) et/ou des points de fonctionnement et/ou du temps. Elles peuvent aussi être paramétrées en fonction d'informations reçues en retour dans le cas d'applications interactives telle que des informations des taux d'erreur binaires (TEB) ou de taux d'erreurs paquets (TEP) mesurés.

Comme montré figure 4b, côté récepteur, le signal reçu est démodulé par le démodulateur hiérarchique 20' par des moyens 21' et 22' selon les deux niveaux hiérarchiques (en l'occurrence MSB et LSB) en deux flux qui sont répartis par un désaiguilleur 30' selon deux flux 1 et 2 en appliquant comme loi de répartition l'inverse de celle de l'aiguilleur 30 de l'émetteur. Le flux 1 est décodé par le décodeur 1', le flux 2 par le décodeur 2'. Les bits décodés sont alors répartis par un désinjecteur 10' selon deux flux HP et LP en appliquant comme loi de répartition l'inverse de celle de l'injecteur 10 de l'émetteur.

Cet exemple peut typiquement s'appliquer à un signal de diffusion HDTV qui comporte un premier signal dit SD (« Standard Definition ») et un complément HD à ce premier signal pour atteindre la qualité HD. Le flux HP est dédié à ce premier signal SD, le flux LP étant dédié au complément HD.

Les exemples précédents concernent un signal à deux flux (HP et LP) avec donc un émetteur à deux codeurs et un modulateur hiérarchique à deux niveaux (MSB, LSB), et un récepteur correspondant.

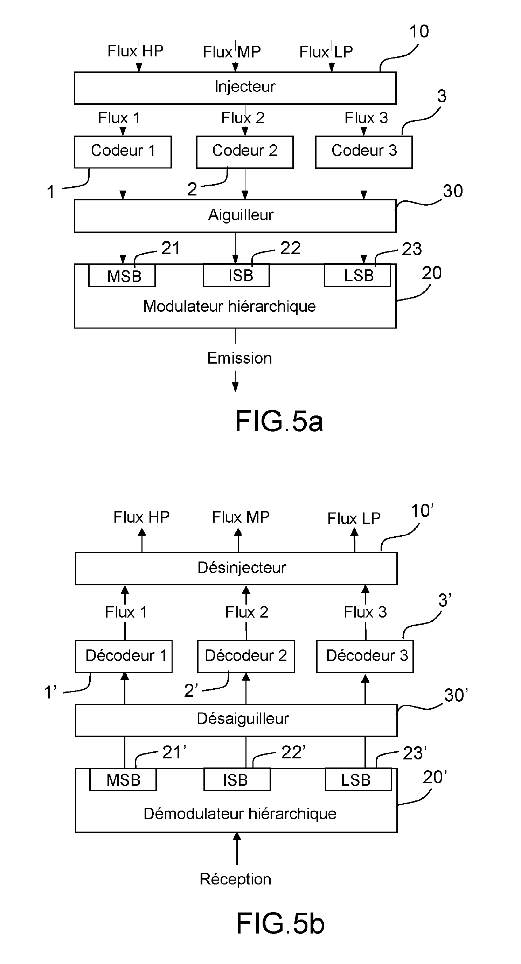

L'exemple suivant décrit en relation avec les figures 5 est celui d'une transmission de trois flux binaires classés par ordre de priorité : HP pour High Priority, MP pour Medium Priority et LP pour Low Priority. Dans cet exemple, la modulation illustrée est une modulation 64-QAM hiérarchique proposée dans le standard DVB-T et dont la constellation est illustrée par la figure 2c. Un symbole de la constellation est représenté par 6 bits (ABCDEF). Les 2 bits de poids fort (MSB : AB----) qui sont les plus prioritaires correspondent au 1er niveau du modulateur hiérarchique, les 2 bits intermédiaires (ISB : acronyme de l'expression anglo-saxonne « Intermediate Significant Bit » : --CD--) à priorité intermédiaire correspondent au 2ème niveau et les 2 bits de poids faible (LSB : ----EF) qui sont les moins prioritaires correspondent

au 3ème niveau.

L'injecteur 10 de l'émetteur correspondant représenté figure 5a répartit dynamiquement les bits des flux HP, MP et LP entre trois codeurs 1, 2, 3 selon une loi prédéfinie. L'aiguilleur 30 répartit dynamiquement les bits codés entre les trois niveaux hiérarchiques (en l'occurrence entre les bits les plus prioritaires (MSB), à priorité intermédiaire (ISB) et les moins prioritaires (LSB) du modulateur hiérarchique 20.

A l'inverse, le signal reçu par le récepteur correspondant représenté figure 5b est démodulé par un démodulateur 20' selon les trois niveaux hiérarchiques (en l'occurrence MSB, ISB et LSB) en trois flux qui sont répartis par un désaiguilleur 30' selon trois flux 1, 2 et 3 en appliquant comme loi de répartition l'inverse de celle de l'aiguilleur 30 de l'émetteur. Les flux 1, 2 et 3 sont respectivement décodés par trois décodeurs 1', 2', 3'. Les bits décodés sont alors répartis par un désinjecteur 10' selon trois flux HP, MP et LP en appliquant comme loi de répartition l'inverse de celle de l'injecteur 10 de l'émetteur.

Cet exemple peut typiquement s'appliquer à un signal de diffusion TV3D qui comporte un premier signal dit SD (« Standard Definition »), un premier complément HD à ce premier signal pour atteindre une qualité HD, et un deuxième complément 3D à ce premier complément pour atteindre une qualité 3D. Le flux HP est dédié à ce premier signal SD, le flux MP étant dédié au complément HD, et le flux LP étant dédié au complément 3D.

Plus généralement l'invention s'applique à un signal à N flux, avec un émetteur à N codeurs et avec un modulateur hiérarchique à N niveaux et un récepteur correspondant.

Comme indiqué dans le préambule ces émetteur-récepteurs sont particulièrement bien adaptés aux systèmes de diffusion par satellite que ce soit vers les mobiles ou vers des stations fixes. Plus généralement ils peuvent être utilisés pour n'importe quel type de transmission de signaux numériques : pour des transmissions de signaux RF par voie terrestre (TNT par exemple) ou satellitaire, transmission par câble, par ADSL, par fibre optique, etc.

**Revendications**

1. Procédé d'émission d'un signal comportant simultanément un premier flux de données binaires et au moins un autre flux de données binaires, **caractérisé en ce qu'**il comprend dans l'ordre :

   i. une étape de répartition dynamique des bits des flux de données entre des codeurs (1,2) dite étape d'injection, avec un codeur par flux de données,
   ii. une étape de codage des bits répartis au moyen des codeurs (1,2),
   iii. une étape de répartition dynamique des bits codés entre des niveaux hiérarchiques d'un modulateur (20), dite étape d'aiguillage,
   iv. une étape de modulation hiérarchique au moyen du modulateur (20).

2. Procédé d'émission d'un signal selon la revendication précédente, **caractérisé en ce que** l'injection et/ou l'aiguillage sont paramétrés en fonction de la nature des flux de données, de leurs débits et/ou de points de fonctionnement et/ou du temps.

3. Procédé de réception d'un signal émis par le procédé d'émission selon l'une des revendications précédentes, **caractérisé en ce qu'**il comprend dans l'ordre :

   - une étape de démodulation hiérarchique au moyen d'un démodulateur (20'), avec un niveau hiérarchique par flux de données, de manière réciproque à la modulation,
   - une étape de répartition dynamique des bits démodulés entre des décodeurs de manière réciproque à l'aiguillage, avec un décodeur par flux de données,
   - une étape de décodage des bits répartis entre les décodeurs au moyen des décodeurs (1', 2'), de manière réciproque au codage,
   - une étape de répartition dynamique des flux décodés en un premier flux et au moins un autre flux de données binaires de manière réciproque à l'injection.

4. Procédé d'émission ou de réception d'un signal selon l'une des revendications précédentes, **caractérisé en ce que** le premier flux de données binaires est un flux prioritaire, et **en ce que** le (ou les) autre(s) flux de données binaires est (sont) un (des) flux moins prioritaire(s).

5. Procédé d'émission ou de réception d'un signal selon la revendication précédente, **caractérisé en ce qu'**il comporte un flux prioritaire et un flux moins prioritaire et **en ce que** le signal étant un signal TVHD qui comporte un signal standard et un complément HD, le flux prioritaire est dédié au signal standard, le flux moins prioritaire est dédié au complément HD.

6. Procédé d'émission ou de réception d'un signal selon la revendication 4, **caractérisé en ce qu'**il comporte un flux à haute priorité, un flux à priorité moyenne et un flux à basse priorité, et **en ce que** le signal étant un signal TV3D qui comporte un signal standard, un complément HD et un complément 3D, le flux à haute priorité est dédié au signal standard, le flux à priorité moyenne est dédié au complément HD, et le flux à basse priorité est dédié au complément 3D.

7. Emetteur d'un signal comportant simultanément un premier flux de données binaires et au moins un autre flux de données binaires, **caractérisé en ce qu'**il comprend :

   - un injecteur (10) qui répartit dynamiquement les bits des flux de données entre des codeurs (1, 2), avec un codeur par flux de données,
   - les codeurs (1, 2) qui codent les bits répartis,
   - un aiguilleur (30) relié aux codeurs (1, 2) qui répartit dynamiquement les bits codés entre des niveaux hiérarchiques d'un modulateur hiérarchique (20), avec un niveau hiérarchique par flux de données,
   - un modulateur hiérarchique (20) des bits codés, relié à l'aiguilleur.

8. Emetteur d'un signal selon la revendication précédente, **caractérisé en ce que** le signal comportant deux flux, il comprend deux codeurs (1, 2) de type codeur de canal et un modulateur hiérarchique (20) à deux niveaux de type MSB et LSB.

9. Récepteur d'un signal émis par un émetteur selon l'une des revendications 7 ou 8, **caractérisé en ce qu'**il comprend :

   - un démodulateur hiérarchique (20') du signal reçu, avec un niveau hiérarchique par flux de données,
   - un désaiguilleur (30') relié au démodulateur hiérarchique (20'), qui répartit dynamiquement les bits démodulés entre des décodeurs de manière réciproque à l'aiguilleur de l'émetteur,
   - reliés au désaiguilleur, les décodeurs (1', 2') des bits démodulés, avec un décodeur par flux de données,
   - un désinjecteur (10') relié aux décodeurs (1, 2), qui répartit dynamiquement les bits décodés en un premier flux de données binaires et un (ou des) autre flux de données binaires de manière réciproque à l'injecteur de l'émetteur.

10. Récepteur d'un signal selon la revendication précédente, **caractérisé en ce que** le signal émis comportant deux flux, il comprend deux décodeurs de type décodeur de canal et un démodulateur hiérarchique à deux niveaux de type MSB et LSB.

11. Système de transmission d'un signal comportant simultanément un flux de données binaires de base et au moins un flux de données binaires complémentaire équipé d'au moins un émetteur selon l'une des revendications 7 ou 8, et d'au moins un récepteur selon l'une des revendications 9 ou 10.

12. Système de transmission d'un signal selon la revendication précédente, qui est un système de diffusion par satellite ou terrestre.

13. Système de diffusion d'un signal selon la revendication précédente, ce signal comportant un flux prioritaire et un flux moins prioritaire et étant un signal TVHD qui comporte un signal standard et un complément HD, le flux prioritaire est dédié au signal standard, le flux moins prioritaire est dédié au complément HD.

14. Système de diffusion d'un signal selon la revendication 12, ce signal comportant un flux à haute priorité, un flux à priorité moyenne et un flux à basse priorité, et étant un signal TV3D qui comporte un signal standard, un complément HD et un complément 3D, le flux à haute priorité est dédié au signal standard, le flux à priorité moyenne est dédié au complément HD, et le flux à basse priorité est dédié au complément 3D.

Flux 1
=
Flux HP

Flux 2
=
Flux LP

1

2

Codeur 1

Codeur 2

MSB

21

LSB

22

MSB

LSB

20

Modulateur hiérarchique

Emission

## FIG.1a

Flux 1
=
Flux HP

Flux 2
=
Flux LP

1'

2'

Décodeur 1

Décodeur 2

21'

22'

MSB

LSB

20'

Démodulateur hiérarchique

Réception

## FIG.1b

FIG.2a

FIG.2b

FIG.2c

FIG.3

10

Flux HP          Flux LP

| Injecteur |

Flux 1 = HP et/ou LP          Flux 2 = HP et/ou LP

1

| Codeur 1 |          | Codeur 2 |          2

30

| Aiguilleur |

21          22

| MSB |          | LSB |

20          Modulateur hiérarchique

Emission

# FIG.4a

10'

Flux HP          Flux LP

| Désinjecteur |

Flux 1          Flux 2

1'

| Décodeur 1 |          | Décodeur 2 |          2'

30'

| Désaiguilleur |

21'          22'

| MSB |          | LSB |

20'          Démodulateur hiérarchique

Réception

# FIG.4b

FIG.5a

FIG.5b

**Europäisches Patentamt**
**European Patent Office**
**Office européen des brevets**

# RAPPORT DE RECHERCHE EUROPEENNE

Numéro de la demande

EP 11 19 3559

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | EP 2 207 320 A1 (ALCATEL LUCENT [FR]; ECOLE SUPERIEURE ELECTRICITE [FR]; CENTRE NAT REC) 14 juillet 2010 (2010-07-14) * abrégé * * alinéas [0030], [0031], [0045], [0052], [0066], [0080]; figures 1-4, 9 * | 1-14 | INV. H04L27/34 |
| A | WO 03/024048 A2 (REDLINE COMM INC [CA]; SARCA OCTAVIAN V [CA]) 20 mars 2003 (2003-03-20) * abrégé * * page 7, ligne 12 - page 8, ligne 23 * * page 13, ligne 7 - ligne 33 * * figures 5, 6 * | 1-3,7,9, 11 | |
| A | SEUNG HYUN CHOI ET AL: "The Mapping and demmaping algorithms for high order modulation of DVB-S2 systems", COMMUNICATIONS, 2006 ASIA-PACIFIC CONFERENCE ON, IEEE, PI, 1 août 2006 (2006-08-01), pages 1-5, XP031024193, ISBN: 978-1-4244-0573-2 * le document en entier * | 1,3-14 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Berlin | 20 mars 2012 | Masche, Christian |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 19 3559

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2012

| Document brevet cité au rapport de recherche | | Date de publication | Membre(s) de la famille de brevet(s) | | Date de publication |
|---|---|---|---|---|---|
| EP 2207320 | A1 | 14-07-2010 | AT | 511286 T | 15-06-2011 |
| | | | CN | 102246486 A | 16-11-2011 |
| | | | EP | 2207320 A1 | 14-07-2010 |
| | | | KR | 20110102875 A | 19-09-2011 |
| | | | US | 2012057641 A1 | 08-03-2012 |
| | | | WO | 2010081760 A1 | 22-07-2010 |
| WO 03024048 | A2 | 20-03-2003 | AU | 2002328209 A1 | 24-03-2003 |
| | | | EP | 1428367 A2 | 16-06-2004 |
| | | | WO | 03024048 A2 | 20-03-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 2207320 A